# EUROPEAN PATENT SPECIFICATION

(11) **EP 2 750 401 B1**
(45) Date of publication and mention of the grant of the patent: **01.03.2017**
(21) Application number: 13199462.6
(22) Date of filing: 23.12.2013
(51) Int. Cl.: H04N 21/431, H04N 21/485, H04N 5/445

(54) **Display apparatus and method for providing menu thereof**
Anzeigevorrichtung und Verfahren zur Bereitstellung des Menüs dafür
Appareil d'affichage et procédé associé pour fournir un menu

(30) Priority: 26.12.2012 KR 20120152727
(43) Date of publication of application: 02.07.2014
(73) Proprietor: Samsung Electronics Co., Ltd, Gyeonggi-do 443-742 (KR)
(72) Inventor: Kim, Ji-won, Seoul (KR)
(74) Representative: Appleyard Lees IP LLP

(56) References cited:
- EP-A1- 2 320 647
- US-A1- 2002 047 866
- US-A1- 2011 119 621
- US-A1- 2011 126 148
- US-A1- 2012 266 071

## Description

### BACKGROUND

### 1. Field

Aspects of the exemplary embodiments relate to display apparatuses and methods for providing a menu thereof. More particularly, exemplary embodiments relate to display apparatuses which are capable of dividing a display screen into a plurality of areas and displaying one of a plurality of images on each of the plurality of the divided areas, and methods for providing a menu thereof.

### 2. Description of the Related Art

A user demand for viewing various images on a display apparatus has been increasing. Therefore, a related art display apparatus may provide the function of dividing a display screen into a plurality of areas and displaying a plurality of images on each of the plurality of areas.

However, the related art display apparatus only provides a menu for controlling a plurality of images simultaneously (for example, a menu for image setting), and does not provide a menu for controlling each of a plurality of images displayed on a plurality of areas individually.

Therefore, it is difficult for a user to control only one image, from among a plurality of images displayed on a plurality of areas.

US 2011/0119621 (LG Electronics) discloses a contents processing device including a network interface unit configured to request contents information from a plurality of contents provider and to display multiple contents windows.

EP 2320647 (Samsung) discloses a display apparatus including a display unit and a controller to control the display unit to display a plurality of icons corresponding to a plurality of content items selected by a user.

US 2012/266071 (Chen) discloses the audio control of multimedia objects.

### SUMMARY

According to the present invention there is provided an apparatus and method as set forth in the appended claims. Other features of the invention will be apparent from the dependent claims, and the description which follows. An aspect of the exemplary embodiments relates to a display apparatus which may provide a simultaneous control method for controlling a plurality of images displayed one on each of a plurality of areas of a display screen at the same time and an individual control method for controlling a plurality of images individually, and a method for controlling a menu thereof.

According to the present invention, there may be provided a method for providing a menu of a display apparatus comprising dividing a display screen of a display apparatus into a plurality of areas and displaying each of a plurality of images on each of the plurality of areas simultaneously in response to a predetermined first user command being input, displaying a control menu on at least one of the plurality of areas; and in response to a predetermined second user command being input through the displayed control menu, controlling at least one image displayed on at least one of the plurality of areas on which the control menu is displayed, according to the predetermined second user command, wherein in response to the control menu being displayed on at least two of the plurality of areas and the predetermined second user command being input, the controlling comprises simultaneously controlling at least two images displayed on the at least two of the plurality of areas on which the control menu is displayed

Further features of the present invention are set out in the appended claims.

### BRIEF DESCRIPTION OF THE DRAWINGS

The above and/or other aspects of the exemplary embodiments will be more apparent by describing certain exemplary embodiments with reference to the accompanying drawings, in which:
FIG. 1 is a block diagram illustrating a configuration of a display apparatus according to an exemplary embodiment;
FIG. 2 is a block diagram illustrating a detailed configuration of a display apparatus according to an exemplary embodiment;
FIGS. 3 to 8 are views illustrating a simultaneous control menu or an individual control menu provided by a display apparatus according to various exemplary embodiments; and
FIG. 9 is a flowchart provided to explain a method for controlling a menu of a display apparatus according to an exemplary embodiment.

### DETAILED DESCRIPTION OF EXEMPLARY EMBODIMENTS

Certain exemplary embodiments are described in detail below with reference to the accompanying drawings.

In the following description, like drawing reference numerals are used for the like elements, even in different drawings. The matters defined in the description, such as detailed construction and elements, are provided to assist in a comprehensive understanding of exemplary embodiments. However, exemplary embodiments can be practiced without those specifically defined matters. Also, well-known functions or constructions are not described in detail since they would obscure the application with unnecessary detail.

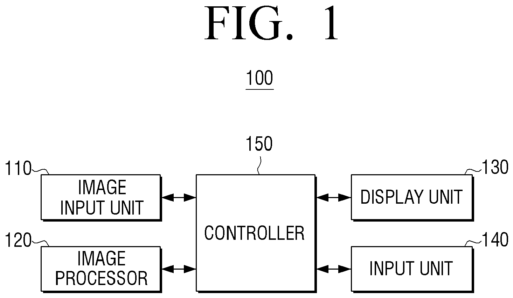

FIG. 1 is a block diagram illustrating a configuration of a display apparatus according to an exemplary embodiment. As illustrated in FIG. 1, a display apparatus 100 comprises an image input unit 110, an image processor 120, a display unit 130, an input unit 140, and a controller 150. In this case, the display apparatus 100 may be a smart television, but this is only an example. The display apparatus 100 may be realized as various display apparatuses, such as tablet PC, smart-phone, projection television, etc. Meanwhile, the display apparatus 100 according to an exemplary embodiment may be a display apparatus capable of outputting images having Ultra High Definition (UHD)-level resolution (7680 X 4320).

The image input unit 110 receives image data from a plurality of sources. Specifically, the image input unit 110 may receive broadcast data from an external broadcasting station, image data from an external apparatus (for example, set-top box, DVD player, BD player, etc.) and Internet web page data via a network.

The image processor 120 performs signal processing so that an image input through the image input unit 110 can be displayed by the display unit 130. Specifically, the image processor 120 may perform signal processing, such as video decoding, format analysis, video scaling, etc., and operations such as adding a GUI, etc., with respect to a 3D image input to the image input unit 110.

In particular, the image processor 120, according to an exemplary embodiment, may be realized as a plurality of image processing modules in order to display a plurality of images on each of a plurality of areas of a display screen.

The display unit 130 displays image data, which is image processed by the image processor 120. In this case, the display unit 130 may be divided into a plurality of areas, and display one of a plurality of image data on each of the plurality of areas simultaneously. For example, the display unit 130 may divide a display screen into four areas, and display the first to the fourth images on each of the four areas respectively.

The input unit 140 receives a user command to control the display apparatus 100. In particular, the input unit 140 may receive the first user command to generate a simultaneous control menu for controlling a plurality of images displayed on a plurality of areas simultaneously, and the second user command to generate an individual control menu for controlling one of a plurality of images displayed on a plurality of areas individually. Meanwhile, the input unit 140, according to an exemplary embodiment, may be realized as a remote controller, but this is only an example. The input unit 140 may be realized as various input apparatus, such as touch screen, mouse, pointing device, etc.

The controller 150 controls overall operations of the display apparatus 100 according to a user command input through the input unit 140. In particular, if the predetermined first user command is input through the input unit 140 while a plurality of images are each displayed on each of a plurality of areas of the display unit 130 respectively, the controller 150 controls the display unit 130 to display a simultaneous control menu to control the plurality of images simultaneously. Alternatively, if the predetermined second user command is input through the input unit 140 while each of a plurality of images are displayed on each of a plurality of areas of the display unit 130 respectively, the controller 150 controls the display unit 130 to display an individual control menu to control one of the plurality of images.

Specifically, if the predetermined first user command (e.g., a user command to select a predetermined first button of a remote controller) is input through the input unit 140 while each of a plurality of images are displayed on each of a plurality of areas of the display unit 130 respectively, the controller 150 controls the display unit 130 to display a simultaneous control menu to control the plurality of images simultaneously. In this case, the controller 140 may control the display unit 130 to display a simultaneous control menu over the plurality of images. In addition, the controller 140 may control the display unit 130 to display information that a menu in the simultaneous control menu controls the plurality of areas simultaneously (e.g., the title of "simultaneous control menu").

Alternatively, if the predetermined second user command (for example, a user command to select a predetermined second button of a remote controller) is input through the input unit 140 while the simultaneous control menu is displayed, the controller 150 may control the display unit 130 to display an individual control menu to control one of the plurality of images. In this case, the controller 150 may control the display unit 130 to display the individual control menu within an area where an image to be controlled is displayed. In addition, the controller 150 may control the display unit 130 to display information on an image to be controlled within the individual control menu. For example, the controller 150 may control the display unit 130 to display the title of an image to be controlled within the individual control menu. Further, in order to represent an image which is controlled by the individual control menu, the controller 150 may control the display unit 130 to display the same indicator (e.g., highlight, etc.) on the individual control menu and each image to be controlled by the individual control menu.

The controller 150 may change an image to be controlled by the individual control menu according to a user command input through the input unit 140. Specifically, if the input unit 140 is a remote controller, the controller 150 may change an image to be controlled by the individual control menu according to a direction button, from among direction buttons provided on a remote controller. In addition, the controller 150 may toggle an image to be controlled by a specific button on a remote controller. Therefore, the image to be controlled is selected in the individual control menu.

If the display apparatus 100 includes a sensor (not shown) which senses an area indicated by the input unit 140, the controller 150 may determine an area which is indicated by the input unit, from among a plurality of areas, through the sensor. Further, the controller 150 may set an image displayed on the determined area as an image to be controlled by the individual control menu.

In addition, if the input unit 140 includes a motion input unit which receives a user motion, the controller 150 may recognize the user motion input through the motion input unit, and may change an image to be controlled by the individual control menu, according to the direction of the recognized user motion.

As described above, the display apparatus 100 allows a user to control a plurality of images displayed on a display screen simultaneously or individually. Therefore, user convenience may be improved.

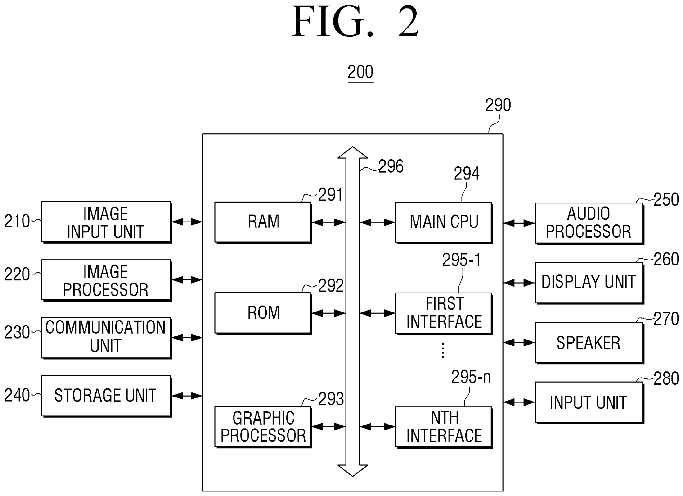

Hereinafter, the exemplary embodiment will be explained in greater detail with reference to FIGS. 2 to 8. FIG. 2 is a block diagram illustrating a detailed configuration of a display apparatus 200 according to an exemplary embodiment. As illustrated in FIG. 2, the display apparatus 200 comprises an image input unit 210, an image processor 220, a communication unit 230, a storage unit 240, an audio processor 250, a display unit 260, a speaker 270, an input unit 280, and a controller 290.

FIG. 2 is a view illustrating each component comprehensively, by taking a case where the display apparatus 200 is an apparatus providing various functions, such as a communication function, broadcast reception function, video reproduction function, and display function. However, the various functions are merely provided as examples. Therefore, some of the components illustrated in FIG. 2 may be omitted or changed, or other components may be added, depending on exemplary embodiments.

The image input unit 210 receives image data through various sources. Specifically, the image input unit 210 may receive broadcast data from an external broadcasting station, and image data from an external apparatus (for example, set-top box, DVD apparatus, and USB apparatus). In addition, the image input unit 210 may receive web page image data via an external network.

The image processor 220 is a component which processes image data received from the image input unit 210. The image processor 220 may perform various image processing, such as decoding, scaling, noise filtering, frame rate conversion, resolution conversion, etc., with respect to image data. Meanwhile, the image processor 220, according to an exemplary embodiment, may include a plurality of image processing modules in order to display a plurality of images on the display unit 260 simultaneously.

The communication unit 230 is a component to perform communication with various types of external apparatuses according to various types of communication methods. The communication unit 230 may comprise various communication chips, such as a WiFi chip, a Bluetooth chip, a Near Field Communication (NFC) chip, a wireless communication chip, etc. In this case, the WiFi chip, the Bluetooth chip, and the NFC chip perform communication according to a WiFi method, a Bluetooth method, and an NFC method respectively. The NFC chip refers to a chip which operates according to an NFC method by using 13.56MHz, from among various RF-ID frequency bands such as 135kHz, 13.56MHz, 433MHz, 860∼960MHz, 2.45GHz, etc. When the WiFi chip or the Bluetooth chip is used, various connection information, such as SSID, session key, etc., is received/transmitted in advance so that communication can be performed using the same, and various information can be received/transmitted. The wireless communication chip refers to a chip which performs communication according to various communication standards, such as IEEE, Zigbee, 3G (3rd Generation), 3GPP (3rd Generation Partnership Project), LTE (Long Term Evolution), etc.

The storage unit 240 stores various modules to drive the display apparatus 200. For example, the storage unit 240 may store software, including a base module, a sensing module, a communication module, a presentation module, a web browser module, and a service module. In this case, the base module is a basic module which processes a signal transmitted from each hardware included in the display apparatus 200, and transmits the processed signal to an upper layer module. The sensing module collects information from various sensors, and analyzes and manages the collected information. The sensing module may include a face recognition module, a voice recognition module, a motion recognition module, an NFC recognition module, etc. The presentation module is a module to compose a display screen. The presentation module may include a multimedia module to reproduce and output multimedia contents, and a UI rendering module to perform UI and graphic processing. The communication module is a module to perform communication with outside. The web browser module is a module to access a web server by performing web browsing. The service module is a module including various applications to provide various services.

As described above, the storage unit 240 may include various program modules, but some of the various program modules may be omitted, changed, or added according to the type and characteristics of the display apparatus 200. For example, if the display apparatus 200 is realized as a tablet PC, the basic module may further include a determination module to determine a GPS-based location, and the sensing module may further include a sensing module to sense the operation of a user.

The audio processor 250 is a component which performs processing with respect to audio data. The audio processor 250 may perform various processing such as decoding, amplifying, noise filtering, etc., with respect to audio data. The audio data, processed by the audio processor 250, may be output to the speaker 270.

The display unit 260 displays at least one of a video frame which is generated as the image processor 220 processes image data received from the image input unit 210, and various screens which are generated by a graphic processor 293. In particular, the display unit 260 may divide a display screen into a plurality of areas and display a plurality of images input through the image input unit 210 on each of the plurality of areas.

The speaker 270 is a component which outputs various alarm sounds or voice messages, as well as various audio data processed by the audio processor 250.

The input unit 280 receives a user command to control overall operations of the display apparatus 200. In this case, the input unit 280 may be realized as a remote controller, including a plurality of buttons (e.g., a button for generating a menu, a button for moving left, right, up, or down, a button for selection, etc.). However, the input unit 280 being a remote controller is only an example. The input unit 280 may be realized as other input apparatuses capable of controlling the display apparatus 200, such as a touch panel, a pointing device, etc.

In particular, the input unit 280 may receive the first user command to generate the simultaneous control menu for controlling a plurality of images displayed on the display unit 260, or the second user command to generate the individual control menu for controlling one of a plurality of images displayed on the display unit 260. In this case, if the input unit 280 is a remote controller, the first user command may be a user command to select the predetermined first button of the remote controller, and the second command may be a user command to select the predetermined second button of the remote controller. The first button and the second button are different from each other, but they may be realized as the same button. In this case, if the first button is selected once, the controller 290 may display the simultaneous control menu, and if the first button is selected once more, the controller 290 may the display unit 260 to change the simultaneous control menu to the individual control menu and display the individual control menu.

The controller 290 controls the overall operations of the display apparatus 200 using various programs stored in the storage unit 240.

As illustrated in FIG. 2, the controller 290 comprises a RAM 291, a ROM 292, a graphic processor 293, a main CPU 294, first to nth interface 295-1 ∼ 295-n, and a bus 296. In this case, the RAM 291, the ROM 292, the graphic processor 293, the main CPU 294, and the first to nth interface 295-1 ∼ 295-n may be connected to each other through the bus 296.

The ROM 292 stores a set of commands for system booting. If a turn-on command is input and power is supplied, the main CPU 294 copies an O/S stored in the storage unit 240 in the RAM 291 according to a command stored in the ROM 292, and executes the O/S to boot the system. Once the system booting is completed, the main CPU 294 copies various application programs stored in the storage unit 240 in the RAM 291, and performs various operations by executing the application programs copied in the RAM 291.

The graphic processor 293 generates a screen including various objects, such as icon, image, text, etc., using an operator (not shown) and a renderer (not shown). The operator calculates property values, such as coordinates, shape, size, color, etc., of a screen where each object is displayed, according to a layout of a screen using a control command received from the user command input unit 280. The renderer generates a screen of various layouts, including an object based on the property values calculated by the operator. The screen generated by the renderer is displayed within a display area of the display unit 210.

The main CPU 294 performs booting, using the O/S stored in the storage unit 240. In addition, the main CPU 294 performs various operations using various programs, contents, data, etc., stored in the storage unit 240.

The first to nth interface 295-1 to 295-n are connected to the above-described various components. One of the interfaces may be a network interface, which is connected to an external apparatus through network.

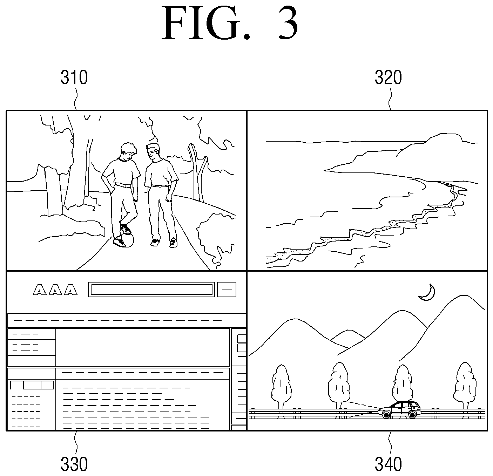

In particular, the controller 290 may divide the display unit 260 into a plurality of areas, and display one of a plurality of images input through the image input unit 290 on each of the plurality of areas. For example, as illustrated in FIG. 3, the controller 290 may control the display unit 260 to display the first broadcast data received from a broadcasting station as the first image 310, the second broadcast data received from a broadcasting station as the second image 320, the webpage data as the third image 330, and the image data received from an external apparatus as the fourth image 340 on one screen.

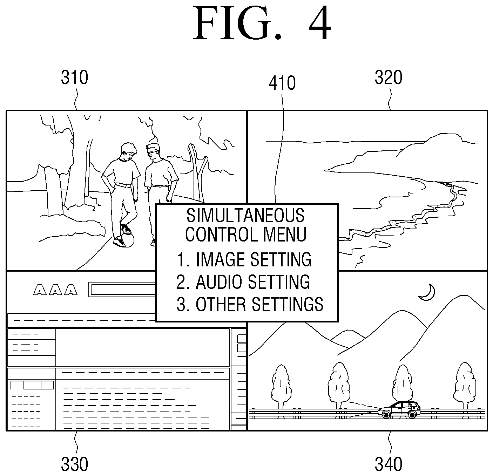

If the predetermined first user command is input through the input unit 280 while each of a plurality of images are displayed on a plurality of areas of the display unit 260 simultaneously, the controller 290 may display a simultaneous control menu for controlling the plurality of images simultaneously. For example, as illustrated in FIGS. 3-4, if the predetermined first user command (e.g., a user command to select the first button of the remote controller) is input through the input unit 280 while the first to the fourth images 310, 320, 330, 340 are displayed on the display unit 260, the controller 290 may control the display unit 260 to display a simultaneous control menu 410. As illustrated in FIG. 4, the simultaneous control menu 410 is a menu for changing the setting of a plurality of images displayed on a plurality of areas of the display unit 260, and may include an image setting item for image setting a plurality of images, an audio setting item for audio setting a plurality of images, and an image setting item for other settings of a plurality of images.

In this case, the controller 290 may control the display unit 260 to display the simultaneous control menu 410 over the plurality of images. For example, the controller 290 may control the display unit 260 to display the simultaneous control menu 410 such that the simultaneous control menu 410 is overlapped with some of the first image to the fourth image 310, 320, 330, 340.

In addition, the controller 290 may control the display unit 260 to display information that a plurality of images can be controlled by a menu in the simultaneous control menu 410 simultaneously. For example, as illustrated in FIG. 4, the simultaneous control menu 410 may include text information indicating that the title of a menu is "a simultaneous control menu".

In the above exemplary embodiment regarding FIG. 4, the simultaneous control menu 410 is displayed over all of the plurality of areas. However, this is only an example. The simultaneous control menu 410 may be displayed in at least one of a plurality of images. In this case, the simultaneous control menu 410 may display information that a plurality of images can be controlled simultaneously.

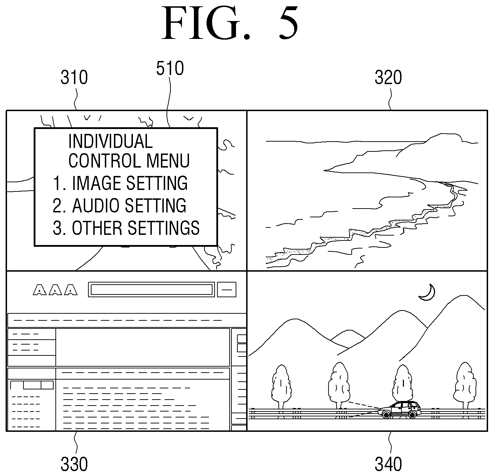

In addition, if the predetermined second user command is input through the input unit 280 while each of a plurality of images are displayed on a plurality of areas of the display unit 260 simultaneously, the controller 290 may display an individual control menu for controlling one of the plurality of images individually. For example, as illustrated in FIGS. 3 and 5, if the predetermined second user command (e.g. a user command to select the second button of the remote controller) is input through the input unit 280 while the first to the fourth images 310, 320, 330, 340 are displayed on the display unit 260, the controller 290 may control the display unit 260 to display an individual control menu 510. As illustrated in FIG. 5, the individual control menu 510 is a menu for changing the setting of one of a plurality of images displayed on a plurality of areas of the display unit 260, and may include an image setting item for image setting one image, an audio setting item for audio setting one image, and an image setting item for other settings of one image.

In this case, the controller 290 may control the display unit 260 to display the individual control menu 510 in an area where an image to be controlled is displayed. For example, as illustrated in FIG. 5, the controller 290 may control the display unit 260 to display the individual control menu 410 within the first image 310 to be controlled.

In addition, the controller 290 may control the display unit 260 to display information that one of a plurality of images can be controlled by a menu in the individual control menu 510. For example, as illustrated in FIG. 5, the individual control menu 510 may include text information indicating that the title of a menu is "an individual control menu".

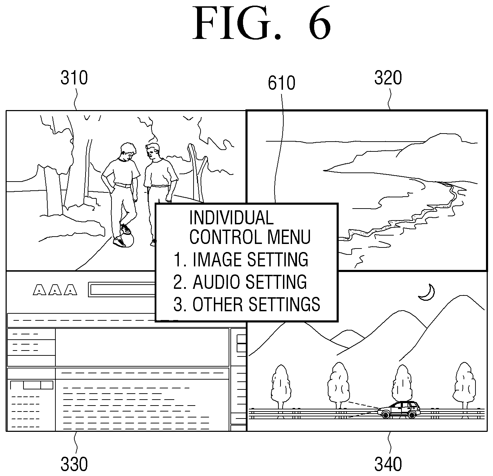

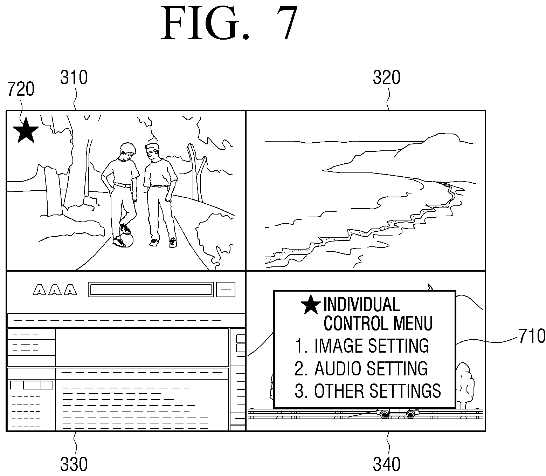

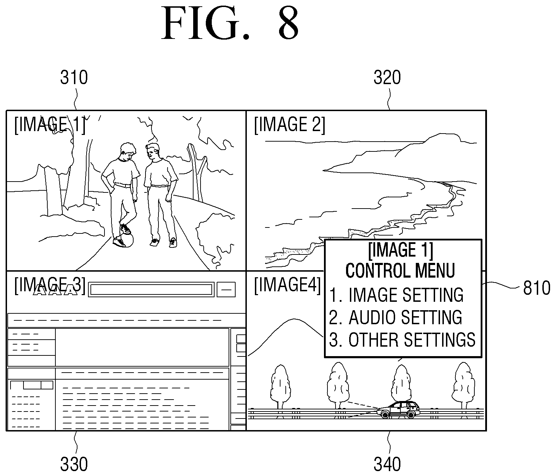

In FIG. 5, the individual control menu 510 is displayed within an image to be controlled, but this is only an example. The individual control menu 510 may be displayed outside the image to be controlled. In this case, in order for a user to recognize an image that is controlled by the individual control menu, the controller 290 may control the display unit 260 to display an indicator in the individual control menu and each image to be controlled by the individual control menu. For example, as illustrated in FIG. 6, the controller 290 may control the display unit 260 to display a highlight on each of an individual control menu 610 and the second image 320, which is an image to be controlled by the individual control menu 610. In another exemplary embodiment, as illustrated in FIG. 7, the controller 290 may control the display unit 260 to display a certain mark (e.g., a star) on each of an individual control menu 710 and the first image 310 to be controlled by the individual control menu 710. Alternatively, as illustrated in FIG. 8, the controller 290 may control the display unit 260 to display within the individual control menu text information such as "image 1 ", "image 2", "image 3", and "image 4" on each of a plurality of areas, and display "image 1", which is text information corresponding to the first image 310 to be controlled by the individual control menu 810.

In addition, the controller 290 may change an image to be controlled by the individual control menu 510, from among a plurality of images according to a user command.

According to an exemplary embodiment, if the display apparatus 200 includes a sensor (not shown) (e.g., an IR sensor) which determines an area indicated by the input unit 280, the controller 290 may determine an area indicated by the input unit which receives a user command from among a plurality of areas. In addition, the controller 290 may set an image which is displayed on the determined area as an image to be controlled by the individual control menu 510. For example, if an area indicated by the input unit 280 is changed from the first area to the second area, the controller 290 may sense through the sensor that the area indicated by the input unit 280 is changed, and change the image to be controlled by the individual control menu 510 from the first image 310 of the first area to the second image 320 of the second area.

According to another exemplary embodiment, if the input unit 280 is a remote controller, the controller 290 may change an image to be controlled by the individual control menu 510 according to a direction button, which is selected from among direction buttons on the remote controller. For example, if the individual control menu 510 is controlling the first image 310 and a downward direction button of the remote controller is selected, the controller 290 may change the image to be controlled by the individual control menu 510 from the first image 310 to the third image 330 which is located below the first image 310.

In addition, the controller 290 may toggle an image to be controlled by the individual control menu 510, as predetermined two buttons are selected in a row. For example, if the predetermined second button is selected once, the controller 290 may set the first image as an image to be controlled by the individual control menu 510, if the predetermined second button is selected again,, the controller 290 may change the image to be controlled by the individual control menu 510 from the first image to the second image, if the predetermined second button is selected once again, the controller 290 may change the image to be controlled by the individual control menu 510 from the second image to the third image, and if the predetermined second button is selected again, the controller 290 may change the image to be controlled by the individual control menu 510 from the third image to the fourth image.

According to another exemplary embodiment, if the input unit 280 is a motion input unit, the controller 290 may recognize a user motion input through the motion input unit, and change an image to be controlled by the individual control menu according to the direction of the recognized user motion. For example, if a slap motion in a right direction is input through the motion input unit while the individual control menu 510 is controlling the first image 310, the controller 290 may change the image to be controlled by the individual control menu 510 from the first image 310 to the second image 320, which is located on the right side of the first image 310.

As described above, the display apparatus 200 allows a user to control a plurality of images displayed on a display screen simultaneously, or to control only some of them. Thus, user convenience may be improved.

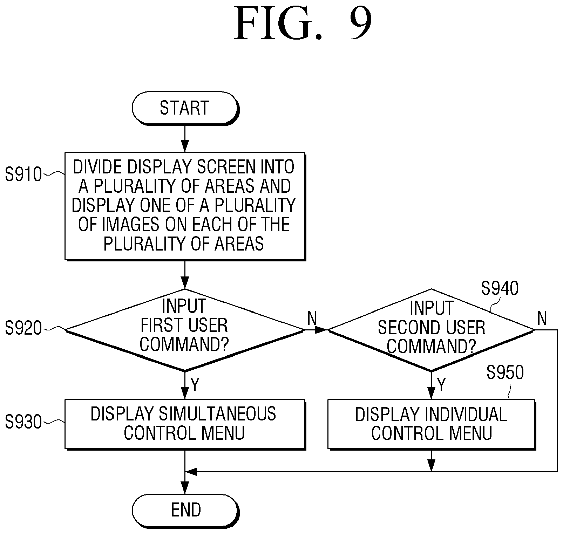

The method for providing a menu of the display apparatus 100 will be explained in detail with reference to FIG. 9.

The display apparatus 100 divides a display screen into a plurality of areas, and displays one of a plurality of images on each of the plurality of areas (S910). For example, as illustrated in FIG. 3, the display apparatus 100 may display four images on a display screen.

Subsequently, the display apparatus 100 determines whether the first use command is input (S920). In this case, the first user command may be a command to select the first button on the input unit 240.

If the first user command is input (S920-Y), the display apparatus 100 displays a simultaneous control menu (S930). The simultaneous control menu is a menu for changing the settings of each of a plurality of images displayed on the plurality of areas of the display screen at the same time. In this case, as illustrated in FIG. 4, the simultaneous control menu may be displayed over the plurality of areas, and information indicating that the menu in the simultaneous control menu is a simultaneous control menu may be displayed.

If the first user command is not input (S920-N), the display apparatus 100 determines whether the second user command is input (S940).

If the second user command is input (S940-Y), the display apparatus 100 displays an individual control menu (S950). In this case, the individual control menu is a menu for changing the setting of one of the plurality of images displayed on the display screen individually. In this case, as illustrated in FIG. 5, the individual control command may be displayed in the image to be controlled. As illustrated in FIGS. 6 to 8, the individual control command may include an indicator, which is the same as the indicator for the image to be controlled.

As described above, the method for providing a menu of the display apparatus 100 allows a user to control a plurality of images displayed on a display screen simultaneously or individually. Thus, user convenience may be improved.

Meanwhile, in the above exemplary embodiment, the predetermined first user command or the second user command is a user command to select the predetermined first button or the second button on the input unit 140. However, this is only an example. For example, the predetermined first user command may be a user voice command, such as "simultaneous menu", and the second user command may be a user voice command, such as "individual menu" or "first image menu".

The method for providing a menu of a display apparatus according to various exemplary embodiments may be realized as a program, and provided in the display apparatus.

Specifically, a non-transitory computer readable medium which stores a program including the step of first displaying of dividing a display screen into a plurality of areas and displaying one of a plurality of images on each of the plurality of areas; the step of second displaying of, if the predetermined first user command is input, displaying a simultaneous control menu for controlling the plurality of images simultaneously; and the step of third displaying of, if the predetermined second user command is input, changing the simultaneous control menu to an individual control menu for controlling one of the plurality of images and displaying the same may be provided.

The non-transitory recordable medium refers to a medium which may store data semi-permanently rather than storing data for a short time such as a register, a cache, and a memory and may be readable by an apparatus. Specifically, the above-mentioned various applications or programs may be stored in a non-temporal recordable medium such as CD, DVD, hard disk, Blu-ray disk, USB, memory card, and ROM.

In another exemplary embodiment of FIGS. 1-2, any of the image input unit 110, the image processor 120, the display unit 130, the input unit 140, and the motion input unit may include at least one processor for performing their respective functions. Further, any of the image input unit 110, the image processor 120, the display unit 130, the input unit 140, and the motion input unit may include a circuit or a hardware module for performing their respective functions.

The foregoing embodiments and advantages are merely exemplary and are not to be construed as limiting the exemplary embodiments. The exemplary embodiments can be readily applied to other types of apparatuses. Also, the description of the exemplary embodiments is intended to be illustrative, and not to limit the scope of the claims. Therefore, many alternatives, modifications, and variations will be apparent to those skilled in the art.

## Claims

1. A method for providing a menu of a display apparatus (100), comprising:
dividing a display screen of a display apparatus into a plurality of areas (310, 320, 330, 340), and displaying one of a plurality of images on each of the plurality of areas, thereby displaying the plurality of images on the display screen simultaneously;
the method **characterised by**:
in response to a predetermined first user command being input, displaying a simultaneous control menu (410) on the plurality of areas, wherein the simultaneous control menu (410) is for simultaneously changing a setting of the plurality of images displayed on the plurality of areas; and
in response to a predetermined second user command being input, displaying an individual control menu (510, 610, 710, 810) in one area of the plurality of areas where one image is displayed, wherein the individual control menu (510, 610, 710, 810) is for changing a setting of the one image on which the individual control menu is displayed.

2. The method as claimed in claim 1, wherein the displaying the simultaneous control menu (410) comprises displaying information indicating that the plurality of areas is controlled in the simultaneous control menu.

3. The method as claimed in claim 1 or claim 2, wherein the displaying the individual control menu (510, 610, 710, 810) comprises displaying an indicator on each of the control menu and an image to be controlled by the control menu in order to indicate an image to be controlled by the individual control menu.

4. The method as claimed in one of claim 1 to claim 3, wherein the displaying the individual control menu (510, 610, 710, 810) comprises:
determining an area indicated by an input unit (410) where a user command is input from among a plurality of areas; and
setting an image displayed on the determined area as an image to be controlled by the individual control menu.

5. The method as claimed in one of claim 1 to claim 3, wherein the displaying the individual control menu (510, 610, 710, 810) comprises:
changing an image to be controlled by the individual control menu according to a direction button selected from among direction buttons on an input unit (140) where a user command is input.

6. The method as claimed in one of claim 1 to claim 3, wherein the displaying the individual control menu (510, 610, 710, 810) comprises:
recognizing a user motion input through a motion input unit (280); and
changing an image to be controlled by the individual control menu according to a direction of the recognized user motion.

7. The method as claimed in one of claim 1 to claim 6, wherein the first user command is a command to select a predetermined first button on a remote controller to control the display apparatus, and the second user command is a command to select a predetermined second button on a remote controller.

8. A display apparatus (200), comprising:
a display unit (260) which is configured to divide a display screen of a display apparatus into a plurality of areas and to display one of a plurality of images (310, 320, 330, 340) on each of the plurality of areas, wherein the plurality of images are displayed on the display screen simultaneously;
an input unit (280) which receives a user command; and
the apparatus being **characterised in that** it further comprises:
a controller (290) configured which, when a predetermined first user command is input, displays a simultaneous control menu (410) on the plurality of areas, wherein the simultaneous control menu (410) is configured to simultaneously change a setting of the plurality of images displayed on the plurality of areas, and
when a predetermined second user command is input, displays an individual control menu (510, 610, 710, 810) on one image of the plurality of images, wherein the individual control menu (510, 610, 710, 810) is configured to control one image on which the individual control menu is displayed.

9. The apparatus (200) as claimed in claim 8, wherein the controller (290) is configured to control the display unit (260) to display information indicating that the plurality of images is controlled simultaneously in the control menu (410), and to display information indicating an image to be controlled in the control menu (510, 610, 710, 810).

10. The apparatus (200) as claimed in one of claim 8 or claim 9, wherein the controller is configured to control the display unit (260) to display an indicator on each of the control menu (510, 610, 710, 810) and an image to be controlled by the control menu in order to indicate an image to be controlled by the control menu.

11. The apparatus (200) as claimed in one of claim 8 to claim 10, further comprising:
a sensor which is configured to sense an area indicated by the input unit,
wherein the controller (290) is configured to determine an area indicated by an input unit from among the plurality of areas through the sensor, and sets an image displayed on the determined area as an image to be controlled by the control menu (510, 610, 710, 810).

12. The apparatus (200) as claimed in one of claim 8 to claim 10, wherein the controller change an image to be controlled by the control menu (510, 610, 710, 810) according to a direction button selected from among direction buttons on an input unit (140).

13. The apparatus (200) as claimed in one of claim 8 to claim 10, wherein the input unit (140) comprises a motion input unit which is configured to receive a user motion,
wherein the controller (290) is configured to recognize a user motion input through the input unit and to change an image to be controlled by the control menu (510, 610, 710, 810) according to a direction of the recognized user motion.

## Patentansprüche

1. Verfahren zum Bereitstellen eines Menüs einer Anzeigevorrichtung (100), das Folgendes umfasst:
Aufteilen eines Anzeigebildschirms einer Anzeigevorrichtung in mehrere Gebiete (310, 320, 330, 340) und Anzeigen eines von mehreren Bildern in jeweils einem der mehreren Gebiete, wodurch die mehreren Bilder gleichzeitig auf dem Anzeigebildschirm angezeigt werden;
wobei das Verfahren **gekennzeichnet ist durch**:
als Reaktion darauf, dass ein vorbestimmter erster Benutzerbefehl eingegeben wird, Anzeigen eines gleichzeitigen Steuermenüs (410) in den mehreren Gebieten, wobei das gleichzeitige Steuermenü (410) zum gleichzeitigen Ändern einer Einstellung der mehreren Bilder, die in den mehreren Gebieten angezeigt werden, vorgesehen ist; und
als Reaktion darauf, dass ein vorbestimmter zweiter Benutzerbefehl eingegeben wird, Anzeigen eines individuellen Steuermenüs (510, 610, 710, 810) in einem Gebiet der mehreren Gebiete, in dem ein Bild angezeigt wird, wobei das individuelle Steuermenü (510, 610, 710, 810) zum Ändern einer Einstellung des einen Bildes der mehreren Bilder, in dem das individuelle Steuermenü angezeigt wird, vorgesehen ist.

2. Verfahren nach Anspruch 1, wobei das Anzeigen des gleichzeitigen Steuermenüs (410) das Anzeigen von Informationen umfasst, die angeben, dass die mehreren Gebiete in dem gleichzeitigen Steuermenü gesteuert werden.

3. Verfahren nach Anspruch 1 oder Anspruch 2, wobei das Anzeigen des individuellen Steuermenüs (510, 610, 710, 810) das Anzeigen eines Indikators im jeweiligen Steuermenü und in einem von dem Steuermenü zu steuernden Bild, um ein von dem individuellen Steuermenü zu steuerndes Bild anzugeben, umfasst.

4. Verfahren nach einem der Ansprüche 1 bis 3, wobei das Anzeigen des individuellen Steuermenüs (510, 610, 710, 810) folgende Schritte umfasst:
Bestimmen eines Gebiets, das von einer Eingabeeinheit (410) angegeben wird, wo ein Benutzerbefehl eingegeben wird, unter mehreren Gebieten; und
Einstellen eines Bildes, das in dem bestimmten Gebiet angezeigt wird, als ein von dem individuellen Steuermenü zu steuerndes Bild.

5. Verfahren nach einem der Ansprüche 1 bis 3, wobei das Anzeigen des individuellen Steuermenüs (510, 610, 710, 810) den folgenden Schritt umfasst:
Ändern eines von dem individuellen Steuermenü zu steuernden Bildes gemäß einer Richtungstaste, die unter Richtungstasten auf einer Eingabeeinheit (140), wo ein Benutzerbefehl eingegeben wird, ausgewählt wird.

6. Verfahren nach einem der Ansprüche 1 bis 3, wobei das Anzeigen des individuellen Steuermenüs (510, 610, 710, 810) die folgenden Schritte umfasst:
Erkennen einer Benutzerbewegungseingabe mittels einer Bewegungseingabeeinheit (280); und
Ändern eines von dem individuellen Steuermenü zu steuernden Bildes gemäß einer Richtung der erkannten Benutzerbewegung.

7. Verfahren nach einem der Ansprüche 1 bis 6, wobei der erste Benutzerbefehl ein Befehl zum Auswählen einer vorbestimmten ersten Taste auf einer Fernsteuerung zum Steuern der Anzeigevorrichtung ist und der zweite Benutzerbefehl ein Befehl zum Auswählen einer vorbestimmten zweiten Taste auf einer Fernsteuerung ist.

8. Anzeigevorrichtung (200), die Folgendes umfasst:
eine Anzeigeeinheit (260), die ausgelegt ist zum Aufteilen eines Anzeigebildschirms einer Anzeigevorrichtung in mehrere Gebiete und zum Anzeigen eines von mehreren Bildern (310, 320, 330, 340) in jeweils einem der mehreren Gebiete, wodurch die mehreren Bilder gleichzeitig auf dem Anzeigebildschirm angezeigt werden;
eine Eingabeeinheit (280), die einen Benutzerbefehl empfängt; und
wobei die Vorrichtung **dadurch gekennzeichnet ist, dass** sie ferner Folgendes umfasst:
eine Steuerung (290), die dafür ausgelegt ist, wenn ein vorbestimmter erster Benutzerbefehl eingegeben wird, ein gleichzeitiges Steuermenü (410) in den mehreren Gebieten anzuzeigen, wobei das gleichzeitige Steuermenü (410) ausgelegt ist zum gleichzeitigen Ändern einer Einstellung der mehreren Bilder, die in den mehreren Gebieten angezeigt werden; und
wenn ein vorbestimmter zweiter Benutzerbefehl eingegeben wird, ein individuelles Steuermenü (510, 610, 710, 810) in einem Bild der mehreren Bilder anzuzeigen, wobei das individuelle Steuermenü (510, 610, 710, 810) ausgelegt ist zum Steuern eines Bildes, in dem das individuelle Steuermenü angezeigt wird.

9. Vorrichtung (200) nach Anspruch 8, wobei die Steuerung (290) ausgelegt ist zum Steuern der Anzeigeeinheit (260), Informationen anzuzeigen, die angeben, dass die mehreren Bilder gleichzeitig von dem Steuermenü (410) gesteuert werden, und Informationen anzuzeigen, die ein von dem Steuermenü (510, 610, 710, 810) zu steuerndes Bild angeben.

10. Vorrichtung (200) nach Anspruch 8 oder Anspruch 9, wobei die Steuerung ausgelegt ist zum Steuern der Anzeigeeinheit (260), einen Indikator im jeweiligen Steuermenü (510, 610, 710, 810) und in einem von dem Steuermenü zu steuernden Bild anzuzeigen, um ein von dem Steuermenü zu steuerndes Bild anzugeben.

11. Vorrichtung (200) nach einem der Ansprüche 8 bis 10, die ferner Folgendes umfasst:
einen Sensor, der ausgelegt ist zum Erfassen eines von der Eingabeeinheit angegebenen Gebiets,
wobei die Steuerung (290) ausgelegt ist zum Bestimmen eines Gebiets, das von einer Eingabeeinheit unter den mehreren Gebieten angegeben wird, mittels des Sensors und zum Einstellen eines Bildes, das in dem bestimmten Gebiet als ein von dem Steuermenü (510, 610, 710, 810) zu steuerndes Bild angezeigt wird.

12. Vorrichtung (200) nach einem der Ansprüche 8 bis 10, wobei die Steuerung ein von dem Steuermenü (510, 610, 710, 810) zu steuerndes Bild gemäß einer Richtungstaste, die unter Richtungstasten auf einer Eingabeeinheit (140) ausgewählt wird, ändert.

13. Vorrichtung (200) nach einem der Ansprüche 8 bis 10, wobei die Eingabeeinheit (140) eine Bewegungseingabeeinheit umfasst, die ausgelegt ist zum Empfangen einer Benutzerbewegung,
wobei die Steuerung (290) ausgelegt ist zum Erkennen einer Benutzerbewegungseingabe mittels der Eingabeeinheit und zum Ändern eines von dem Steuermenü (510, 610, 710, 810) zu steuernden Bildes gemäß einer Richtung der erkannten Benutzerbewegung.

## Revendications

1. Procédé pour fournir un menu sur un appareil d'affichage (100), consistant à :
diviser un écran d'affichage d'un appareil d'affichage en plusieurs zones (310, 320, 330, 340) et afficher une de plusieurs images sur chacune desdites plusieurs zones, de manière à afficher simultanément lesdites plusieurs images sur l'écran d'affichage ;
lequel procédé est **caractérisé en ce que** :
en réponse à l'entrée d'une première instruction d'utilisateur prédéterminée, afficher un menu de commande simultané (410) dans lesdites plusieurs zones, lequel menu de commande simultané (410) permet de changer simultanément un réglage desdites plusieurs images affichées dans lesdites plusieurs zones ; et
en réponse à l'entrée d'une seconde instruction d'utilisateur prédéterminée, afficher un menu de commande individuel (510, 610, 710, 810) dans une zone parmi lesdites plusieurs zones où une image est affichée, le menu de commande individuel (510, 610, 710, 810) permettant de changer un réglage de l'image sur laquelle le menu de commande individuel est affiché.

2. Procédé selon la revendication 1, dans lequel l'affichage du menu de commande simultané (410) consiste à afficher des informations indiquant que lesdites plusieurs zones sont commandées dans le menu de commande simultané.

3. Procédé selon la revendication 1 ou la revendication 2, dans lequel l'affichage du menu de commande individuel (510, 610, 710, 810) consiste à afficher un indicateur sur chacun du menu de commande et d'une image devant être commandée par le menu de commande afin d'indiquer une image devant être commandée par le menu de commande individuel.

4. Procédé selon l'une des revendications 1 à 3, dans lequel l'affichage du menu de commande individuel (510, 610, 710, 810) consiste à :
déterminer une zone indiquée par une unité d'entrée (410) où une instruction d'utilisateur est entrée depuis plusieurs zones ; et
définir une image affichée dans la zone déterminée comme étant une image devant être commandée par le menu de commande individuel.

5. Procédé selon l'une des revendications 1 à 3, dans lequel l'affichage du menu de commande individuel (510, 610, 710, 810) consiste à :
changer une image devant être commandée par le menu de commande individuel en fonction d'un bouton de direction choisi parmi des boutons de direction sur une unité d'entrée (140) où une instruction d'utilisateur est entrée.

6. Procédé selon l'une des revendications 1 à 3, dans lequel l'affichage du menu de commande individuel (510, 610, 710, 810) consiste à :
reconnaître une entrée de mouvement d'utilisateur via une unité d'entrée de mouvement (280) ; et
changer une image devant être commandée par le menu de commande individuel en fonction d'une direction du mouvement d'utilisateur reconnu.

7. Procédé selon l'une des revendications 1 à 6, dans lequel la première instruction d'utilisateur est une instruction pour choisir un premier bouton prédéterminé sur une unité de commande à distance pour commander l'appareil d'affichage, et la seconde instruction d'utilisateur est une instruction pour choisir un second bouton prédéterminé sur une unité de commande à distance.

8. Appareil d'affichage (200) comprenant :
une unité d'affichage (260) conçue pour diviser un écran d'affichage d'un appareil d'affichage en plusieurs zones et afficher une de plusieurs images (310, 320, 330, 340) sur chacune desdites plusieurs zones, lesdites plusieurs images étant affichées simultanément sur l'écran d'affichage ;
une unité d'entrée (280) qui reçoit une instruction d'utilisateur ; et
lequel appareil étant **caractérisé en ce qu'**il comprend en outre :
une unité de commande (290) conçue pour, lorsqu'une première instruction d'utilisateur prédéterminée est entrée, afficher un menu de commande simultané (410) dans lesdites plusieurs zones, lequel menu de commande simultané (410) permet de changer simultanément un réglage desdites plusieurs images affichées dans lesdites plusieurs zones ; et
lorsqu'une seconde instruction d'utilisateur prédéterminée est entrée, afficher un menu de commande individuel (510, 610, 710, 810) dans une zone parmi lesdites plusieurs zones où une image est affichée, le menu de commande individuel (510, 610, 710, 810) permettant de changer un réglage d'une image sur laquelle le menu de commande individuel est affiché.

9. Appareil (200) selon la revendication 8, dans lequel l'unité de commande (290) est conçue pour commander l'unité d'affichage (260) afin d'afficher des informations indiquant que lesdites plusieurs images sont commandées simultanément dans le menu de commande (410), et afficher des informations indiquant une image devant être commandée dans le menu de commande (510, 610, 710, 810).

10. Appareil (200) selon la revendication 8 ou la revendication 9, dans lequel l'unité de commande est conçue pour commander l'unité d'affichage (260) pour afficher un indicateur sur chacun d'un menu de commande (510, 610, 710, 810) et d'une image devant être commandée par le menu de commande afin d'indiquer une image devant être commandée par le menu de commande.

11. Appareil (200) selon l'une des revendications 8 à 10, comprenant en outre :
un capteur conçu pour détecter une zone indiquée par l'unité d'entrée ;
dans lequel l'unité de commande (290) est conçue pour déterminer une zone indiquée par une unité d'entrée parmi les plusieurs zones via le capteur, et définir une image affichée dans la zone déterminée comme étant une image devant être commandée par le menu de commande (510, 610, 710, 810).

12. Appareil (200) selon l'une des revendications 8 à 10, dans lequel l'unité de commande change une image devant être commandée par le menu de commande (510, 610, 710, 810) en fonction d'un bouton de direction choisi parmi des boutons de direction sur une unité d'entrée (140).

13. Appareil (200) selon l'une des revendications 8 à 10, dans lequel l'unité d'entrée (140) comprend une unité d'entrée de mouvement qui est conçue pour recevoir un mouvement d'utilisateur,
dans lequel l'unité de commande (290) est conçue pour reconnaître un mouvement d'utilisateur entré via l'unité d'entrée et changer une image devant être commandée par le menu de commande (510, 610, 710, 810) en fonction d'une direction du mouvement d'utilisateur reconnu.
